# EUROPEAN PATENT APPLICATION

(11) **EP 4 574 253 A1**
(43) Date of publication of application: **25.06.2025**
(21) Application number: 23854959.6
(22) Date of filing: 31.01.2023
(51) Int. Cl.: B01J 13/04, A24F 40/44, C04B 35/16, C04B 35/626, C04B 35/634, C04B 35/64, C04B 38/00, A24F 40/70, A24F 40/10

(54) **METHOD FOR PRODUCING HIGH STRENGTH CERAMIC PARTICLES, AND METHOD FOR PRODUCING MICRO-POROUS SPHERICAL PARTICLES FOR AEROSOL GENERATOR USING BENARD CELL PHENOMENON**

(30) Priority: 19.08.2022 KR 20220104007; 19.08.2022 KR 20220104006; 31.08.2022 KR 20220109587
(71) Applicant: Em-tech. Co., Ltd., Changwon-si, Gyeongsangnam-do 51539 (KR); Giant Chemical Co., Ltd, Yangsan-si, Gyeongsangnam-do 50567 (KR)
(72) Inventor: JEONG, Ok-geun, Yangsan-si Gyeongsangnam-do 50654 (KR); KIM, Dong-hyun, Ulsan 44784 (KR); SEONG, Dong-min, Ulsan 44784 (KR); CHOI, Bong-seok, Ulsan 44784 (KR)
(74) Representative: Müller Hoffmann & Partner
(86) International application number: PCT/KR2023/001414
(87) International publication number: WO 2024/038985

(57) **Abstract**

Provided are a preparing method of high-strength ceramic particles and a preparing method of microporous spherical particles for an aerosol generator using the Benard cell effect. The preparing method of high-strength ceramic particles includes a first step of mixing silicate powder particles combined with metal ions with glass powder particles for low-temperature baking, a second step of adding a polymer and a dispersant to the mixed powder particles and preparing ceramic granules, a third step of press-forming the ceramic granules, and a fourth step of sintering a formed body.

## Description

### TECHNICAL FIELD

The present disclosure relates to a preparing method of high-strength ceramic particles.

### BACKGROUND ART

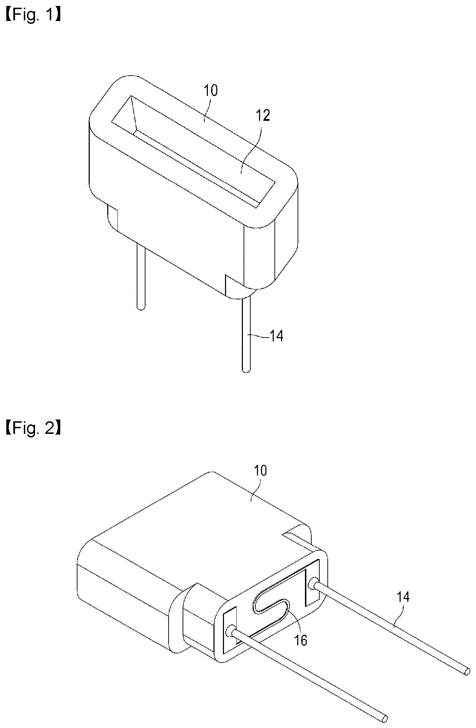

FIG. 1 is a top perspective view of a vaporizing unit of an aerosol generator according to the related art, and FIG. 2 is a bottom perspective view of the vaporizing unit of the aerosol generator according to the related art.

When an aerosol generator employs a wick and a coil assembly as a vaporizing unit, there is a possibility of local carbonization of a liquid phase and the wick due to a difference in heat transfer rate between the wick and the coil. The vaporizing unit of the aerosol generator illustrated in FIGS. 1 and 2 was developed to solve this problem and a vaporizing unit of a fine particle generator according to a first embodiment of the present disclosure includes a porous ceramic 10 that absorbs and supports a liquid phase and a heating element 16 attached to a lower surface of the porous ceramic 10 to heat and vaporize the liquid phase. A power line 14 for applying current to the heating element 16 may be connected to the heating element 16 attached to a surface of the porous ceramic 10.

The porous ceramic 10 includes a recess 12 serving as a reservoir in which a liquid phase may be contained in the center thereof. By providing the reservoir in which the liquid phase may be contained, the liquid phase may be continuously supplied more stably into pores of the porous ceramic 10.

In addition, in the porous ceramic 10, movement of the liquid phase is slow and movement of the aerosol is smooth at high temperatures, and the pores of the porous ceramic 10 may be connected to form a passage through which the aerosol may pass.

Here, as a specific surface area of the porous ceramic 10 increases, the absorption amount of the liquid phase may increase, thereby increasing the amount of atomization.

Therefore, it is required to develop a preparing method capable of improving the specific surface area of the porous ceramic 10 in order to use the porous ceramic 10 as a vaporizing unit for an aerosol generator.

### DISCLOSURE OF THE INVENTION

An aspect of the present disclosure provides a preparing method of high-strength ceramic particles.

Another aspect of the present disclosure provides a preparing method of micro porous spherical particles for an aerosol generator using the Benard cell effect.

An embodiment provides a preparing method of high-strength ceramic particles including: a first step of mixing silicate powder particles combined with metal ions with glass powder particles for low-temperature baking; a second step of adding a polymer and a dispersant to the mixed powder particles and preparing ceramic granules; a third step of press-forming the ceramic granules; and a fourth step of sintering a formed body.

Another aspect of an embodiment provides a preparing method of high-strength ceramic particles, in which the silicate powder particles may include one or more metal ions selected from Mg, Al, Zr, Li, Ba, MgAl, Na, and Ca.

Another aspect of an embodiment provides a preparing method of high-strength ceramic particles, in which the silicate powder particles combined with metal ions may have a specific surface area of 20 to 500 m²/g measured by a Brunauer, Emmett and teller (BET) method.

Another aspect of an embodiment provides a preparing method of high-strength ceramic particles, in which an average particle diameter of the silicate powder particles combined with metal ions may be 5 µm to 500 µm.

Another aspect of an embodiment provides a preparing method of high-strength ceramic particles, in which the glass powder particles for low-temperature baking may be one or more selected from amorphous glass powder particles and ceramic powder particles for low-temperature baking.

Another aspect of an embodiment provides a preparing method of high-strength ceramic particles, in which the glass powder particles for low-temperature baking may have any one of a plate shape, a fiber shape, and a polygonal shape.

Another aspect of an embodiment provides a preparing method of high-strength ceramic particles, in which the glass powder particles for low-temperature baking may have an appropriate baking temperature range of 600 to 1200 ° C.

Another aspect of an embodiment provides a preparing method of high-strength ceramic particles, in which the average particle diameter of the glass powder particles for low-temperature baking may be 0.5 µm to 50 µm.

Another aspect of an embodiment provides a preparing method of high-strength ceramic particles, in which the glass powder particles for low-temperature baking may be mixed with 1 part by weight to 500 parts by weight with respect to the silicate powder particles combined with metal ions.

Another aspect of an embodiment provides a preparing method of high-strength ceramic particles, in which the polymer added in the second step may be one or more selected from polyvinyl alcohol, polyvinyl acetate, polyethylene, polyvinyl butyrene, polypropylene, polyvinyl chloride, polyacryl, polyacrylamide, guar gum, gelatin, and natural rubber.

Another aspect of an embodiment provides a preparing method of high-strength ceramic particles, in which the dispersant added in the second step may be a wettable dispersant.

Another aspect of an embodiment provides a preparing method of high-strength ceramic particles, in which an average particle diameter of the ceramic granules prepared in the second step may be 50 µm to 1000 µm.

Another aspect of an embodiment provides a preparing method of high-strength ceramic particles, in which the sintering in the fourth step may be performed in a temperature range of 600 °C to 1200 °C.

Another aspect of an embodiment provides a preparing method of high-strength ceramic particles, in which, in the sintering process of the fourth step, a ceramic core-shell structure may be formed by surface melting and necking of the glass powder particles for low-temperature baking.

Another aspect of an embodiment provides a preparing method of high-strength ceramic particles, in which the high-strength ceramic particles subjected to the sintering process in the fourth step may be a porous structure.

Another embodiment provides a preparing method of microporous spherical particles for an aerosol generator including: preparing a first dispersion solution by dispersing silicate powder particles combined with metal ions and a binder in a first solvent; preparing a second dispersion solution by dispersing an additive in a second solvent and stirring the second solvent in which the additive is dispersed; mixing the first dispersion solution with the second dispersion solution, and stirring the mixture to prepare a mixed slurry; and spray-drying the mixed slurry.

Another aspect of an embodiment provides a preparing method of microporous spherical particles for an aerosol generator, in which the metal silicate powder particles may include one or more metal ions selected from Mg, Al, Zr, Li, Ba, MgAl, Na, and Ca.

Another aspect of an embodiment provides a preparing method of microporous spherical particles for an aerosol generator, in which the metal silicate powder particles may be dispersed in an amount of 5 wt% to 40 wt% with respect to the first solvent.

Another aspect of an embodiment provides a preparing method of microporous spherical particles for an aerosol generator, in which the binder used in preparing the first dispersion solution may be one or more selected from polyvinyl alcohol, polyvinyl acetate, polyethylene, polyvinyl butyrene, polypropylene, polyvinyl chloride, polyacryl, polyacrylamide, guar gum, gelatin, and natural rubber.

Another aspect of an embodiment provides a preparing method of microporous spherical particles for an aerosol generator, in which the first solvent may include at least one selected from water, ethanol, toluene, IPA, and acetone.

Another aspect of an embodiment provides a preparing method of microporous spherical particles for an aerosol generator, in which the first solvent may be used in an amount of 70 wt% to 220 wt% with respect to a weight of the metal silicate.

Another aspect of an embodiment provides a preparing method of microporous spherical particles for an aerosol generator, in which the additive used in the preparation of the first dispersion solution may include a high boiling point solvent including mineral spirits or xylene.

Another aspect of an embodiment provides a preparing method of microporous spherical particles for an aerosol generator, in which the additive may be added in an amount of 0.5 wt% to 10 wt% with respect to the metal silicate.

Another aspect of an embodiment provides a preparing method of microporous spherical particles for an aerosol generator, in which the second solution may include one or more selected from water, ethanol, toluene, IPA, and acetone.

Another aspect of an embodiment provides a preparing method of microporous spherical particles for an aerosol generator, in which the second solvent used in the preparation of the second dispersion solution may be included in an amount of 5 wt% to 30 wt% with respect to the metal silicate.

Another aspect of an embodiment provides a preparing method of microporous spherical particles for an aerosol generator, in which the spray-drying uses a disk method, and a rotation speed of the disk may be controlled within a range of 500 rpm to 9000 rpm.

Another aspect of an embodiment provides a preparing method of microporous spherical particles for an aerosol generator, in which the spray-drying may be performed in a chamber maintained at a temperature of 220 °C to 300 °C, and in the spray-drying step, the Benard cell effect may be induced to cause defects on a surface of microporous spherical particles.

Another aspect of an embodiment provides a preparing method of microporous spherical particles for an aerosol generator, in which an average particle size of the microporous spherical particles finally prepared after the spray-drying may be 5 µm to 500 µm.

The ceramic absorbent material prepared through the preparing method of a high-strength ceramic absorbent material provided by the embodiment has a core-shell structure, thereby advantageously having high strength.

In addition, a ceramic heater for an aerosol generator prepared by the preparing method of microporous spherical particles for an aerosol generator using the Benard cell effect provided in the embodiment has advantages in that defects may be induced on a surface of the particles by the Benard cell effect , resulting in an increase in the specific surface area of the porous spherical particles, and accordingly, the absorption amount of the liquid phase may increase and the generated amount of aerosol may eventually increase.

### BRIEF DESCRIPTION OF THE DRAWINGS

FIG. 1 is a top perspective view of a vaporizing unit of an aerosol generator according to the related art.
FIG. 2 is a bottom perspective view of the vaporizing unit of an aerosol generator according to the related art.

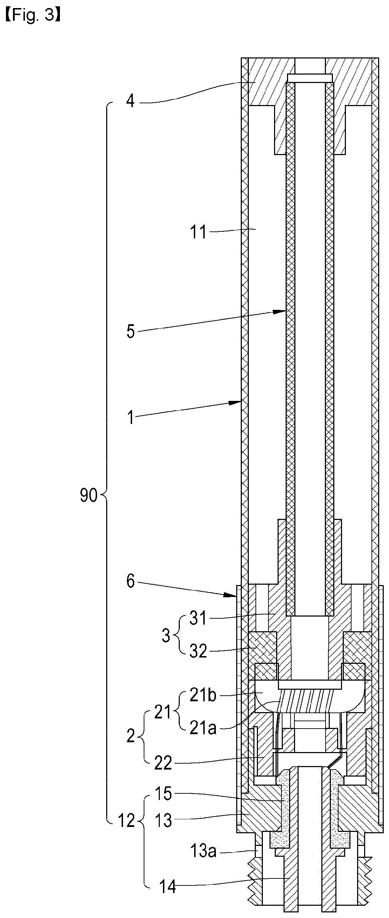

FIG. 3 is a top view of the vaporizing unit of an aerosol generator according to the related art.
FIG. 4 is a flowchart of a preparing method of high-strength ceramic particles according to a first embodiment.
FIG. 5 is a schematic view of a ceramic core-shell structure prepared according to a preparing method of high-strength ceramic particles according to the first embodiment.
FIG. 6 is a scanning microscope photograph of a ceramic core-shell structure prepared according to the preparing method of high-strength ceramic particles according to the first embodiment.
FIG. 7 is a flowchart of a preparing method of microporous spherical particles for an aerosol generator using a Benard cell effect according to a second embodiment.
FIG. 8 is a scanning micrograph photograph of microporous spherical particles prepared according to a preparing method of microporous spherical particles for an aerosol generator using a Benard cell effect according to the second embodiment.

### BEST MODE FOR CARRYING OUT THE INVENTION

Hereinafter, the present disclosure will be described in detail with reference to the accompanying drawings.

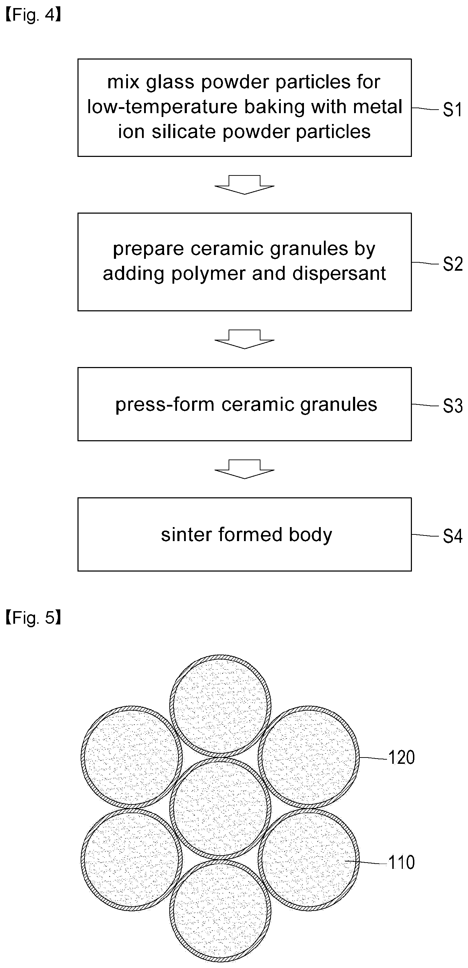

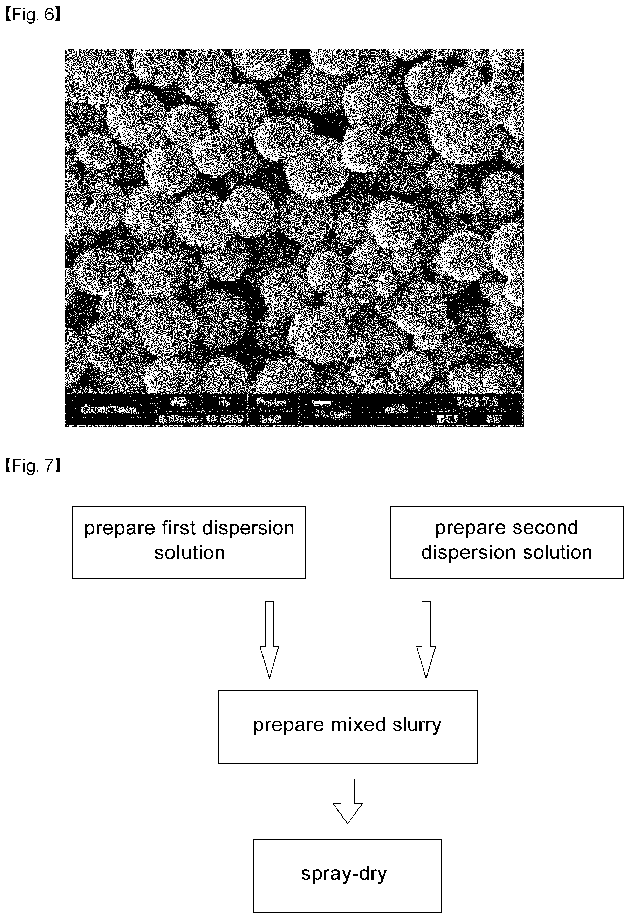

FIG. 4 is a flowchart of a preparing method of high-strength ceramic particles according to a first embodiment, FIG. 5 is a schematic view of a ceramic core-shell structure prepared according to a preparing method of high-strength ceramic particles according to the first embodiment, and FIG. 6 is a scanning microscope photograph of a ceramic core-shell structure prepared according to the preparing method of high-strength ceramic particles according to the first embodiment.

The preparing method of high-strength ceramic particles according to an embodiment includes a first step (S1) of mixing silicate powder particles combined with metal ions with glass powder particles for low-temperature baking, a second step (S2) of adding a polymer and a dispersant to the mixed powder particles and preparing ceramic granules, a third step (S3) of press-forming the ceramic granules, and a fourth step (S4) of sintering a green body.

Here, the silicate powder particles mixed in the first step include one or more metal ions selected from Mg, Al, Zr, Li, Ba, MgAl, Na, and Ca. Here, a specific surface area of the silicate powder particles combined with metal ions measured by a Brunauer, Emmett and teller (BET) method is preferably 100 to 450 m²/g, and an average particle diameter of the silicate powder particles combined with metal ions is preferably 5 µm to 500 µm. If the average particle diameter of the silicate powder particles combined with metal ions exceeds 500 µm, it may be difficult to form spherical beads using a spray drying method.

In addition, the glass powder particles for low-temperature baking mixed with the silicate powder particles in the first step are preferably at least one selected from amorphous glass powder particles and ceramic powder particles for low-temperature baking. Here, the ceramic powder particles for low-temperature baking include Bi₂O₃, Sb₂O₅, B₂O₃, and the like.

Here, the glass powder particles for low-temperature baking may have any one of a plate shape, a fiber shape, and a polygonal shape, and the glass powder particles for low-temperature baking preferably have an appropriate baking temperature range of 600 °C to 1200 °C. In addition, an average particle diameter of the glass powder particles for low-temperature baking is preferably 0.5 µm to 50 µm. Glass powder particles are added as a kind of liquid phase sintering agent that promotes baking, and if the average particle diameter of the glass powder particles for low-temperature baking is more than 50 µm, a distance between the silicate powder particles may increase, thereby reducing a baking effect at the same temperature profile. Therefore, the average particle diameter of the glass powder particles for low-temperature baking is 50 micrometers or less.

Here, the glass powder particles for low-temperature baking are mixed in an amount of 1 part by weight to 500 parts by weight with respect to the silicate powder particles combined with metal ions. In this case, when 1 to 80 parts by weight of the glass powder particles for low-temperature baking are mixed with the silicate powder particles combined with metal ions, the silicate powder particles combined with the metal ion have a larger portion in volume and have strong hydrophilicity. Meanwhile, when 80 to 500 parts by weight of the glass powder particles for low-temperature baking are mixed with the silicate powder particles combined with metal ions, the volume occupied by the glass powder particles for low-temperature baking is larger than that of the silicate powder particles, and hydrophobicity is stronger.

Hydrophobicity or hydrophilicity may be achieved by adjusting the mixing ratio of the low-temperature baking glass powder particles according to the purpose of the high-strength ceramic particles. The high-strength ceramic particles prepared thusly may be used in a bead form as it is, or the beads may be mixed with a binder to form a block to be used as a heater or a liquid phase storage unit of an aerosol generator.

**[Table 1]**

| Added amount of glass powder (wt%) | Load (N) | Bending strength (Mpa) |
|---|---|---|
| 1 | 14 | 3.90 |
| 3 | 24 | 6.05 |
| 30 | 45 | 8.81 |
| 50 | 78 | 9.98 |

Table 1 summarizes measured values of bending strength according to the added amount of glass powder particles for low-temperature baking. It can be seen that the bending strength increases as the added amount of the glass powder particles for low-temperature baking increases. Meanwhile, the polymer added in the second step is one or more materials selected from polyvinyl alcohol, polyvinyl acetate, polyethylene, polyvinylbutyrene, polypropylene, polyvinyl chloride, polyacryl, polyacrylamide, guar gum, gelatin, and natural rubber, and the dispersant is preferably a wettable dispersant.

The average particle diameter of the ceramic granules prepared in the second step is preferably 50 µm to 1000 µm.

Meanwhile, in the third step, ceramic granules are formed by uniaxially or multiaxially pressing, and a ceramic absorbent material is compression-molded to have a desired shape.

The sintering in the fourth step is preferably performed in a temperature range of 600 °C to 1200 °C according to an appropriate baking temperature of the glass powder particles for low-temperature baking.

Through the sintering process of the fourth step, a ceramic core-shell structure is formed by surface melting and necking of the glass powder particles for low-temperature baking. That is, the high-strength ceramic particles advantageously have fracture strength of 1 Mpa or greater even when sintered at a relatively low temperature of 600 °C to 1200 °C by adding glass powder particles for low-temperature baking to the silicate powder particles combined with metal ions requiring high-temperature baking at 1600 °C or higher.

Meanwhile, the high-strength ceramic particles prepared according to the method of the embodiment may be installed in an aerosol generator and used for liquid absorption or for a carrier. In addition, the high-strength ceramic particles may be applied to any case in which an absorbent material that needs to hold liquid while maintaining high strength is needed.

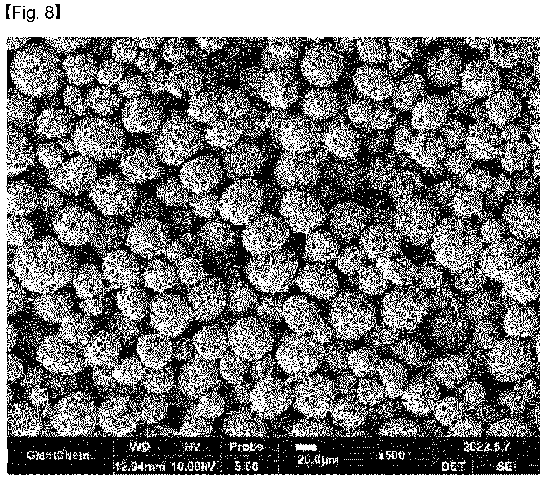

FIG. 7 is a flowchart of a preparing method of microporous spherical particles for an aerosol generator using a Benard cell effect according to a second embodiment, and FIG. 8 is a scanning micrograph photograph of microporous spherical particles prepared according to a preparing method of microporous spherical particles for an aerosol generator using a Benard cell effect according to the second embodiment.

A preparing method of microporous spherical particles for an aerosol generator using a Benard cell effect according to an embodiment includes a step of preparing a first dispersion solution by dispersing silicate powder particles combined with metal ions and a binder in a first solvent, a step of preparing a second dispersion solution by dispersing an additive to a second solvent and stirring the same, a step of preparing a mixed slurry by mixing the first dispersion solution and the second dispersion solution and stirring the mixed solution, and a step of spray drying the mixed slurry.

Here, the metal silicate powder particles preferably include one or more metal ions selected from Mg, Al, Zr, Li, Ba, MgAl, Na, and Ca, and the metal silicate powder particles are dispersed in an amount of 5 wt% to 40 wt% with respect to the first solvent.

Meanwhile, the binder used in the preparation of the first dispersion solution is preferably one or more selected from polyvinyl alcohol, polyvinyl acetate, polyethylene, polyvinyl butyrene, polypropylene, polyvinyl chloride, polyacryl, polyacrylamide, guar gum, gelatin, and natural rubber.

In addition, the first solvent includes one or more selected from water, ethanol, toluene, IPA, and acetone, and the first solvent is preferably used in an amount of 70 wt% to 220 wt% with respect to a weight of the metal silicate.

Here, the additive used in the preparation of the first dispersion solution preferably includes a high boiling point solvent, such as mineral spirits or xylene, and is preferably added in an amount of 0.5 wt% to 10 wt% with respect to the metal silicate. It depends on additives, but in the case of organic additives, when the organic additive is added in an amount of 10 wt% or more, it may be impossible to maintain a bead shape, high viscosity may be caused, and workability may be deteriorated.

In addition, the second solution includes one or more selected from water, ethanol, toluene, IPA, and acetone, and is preferably added in an amount of 5 wt% to 30 wt% with respect to the metal silicate.

The first dispersion solution and the second dispersion solution are mixed and stirred to prepare a mixed slurry, and then the mixed slurry is spray-dried to form microporous spherical particles. Here, the spray drying uses a disk method, and a rotation speed of the disk is preferably adjusted within a range of 500 to 9000 rpm. If the rotation speed of the disk is less than 500 rpm, the effect based on centrifugal force is not significant and the spherical particles becomes excessively large. Meanwhile, if the rotation speed of the rotating disk exceeds 9000 rpm, the rate of generating spherical particles of 20 µm or less may increase, and these small spherical particles may rather block surface pores of a heater or a liquid phase absorbent material when the heater or the liquid phase absorbent material of an aerosol generator is prepared, thereby reducing the specific surface area. Therefore, the rotation speed of the disk is preferably adjusted within a range of 500 to 9000 rpm.

The disk from which the mixed slurry is sprayed rotates in a chamber maintained at a temperature of 220 °C to 300 °C, and the Benard cell effect may be induced in the spray drying step, causing surface defects (cracks) as shown in the photograph of FIG. 8 to increase the specific surface area of the microporous spherical particles. In this case, the microporous spherical particles may advantageously form micropores without separately adding a pore-forming agent during the preparation process. The microporous spherical particles prepared thusly may increase the specific surface area. Therefore, when a heater or liquid phase absorbent material of an aerosol generator is prepared with the microporous spherical particles for an aerosol generator using the Benard cell effect according to an embodiment, the amount of moisture absorption that may absorb the liquid phase may increase, and accordingly, the amount of atomization that may be generated by vaporizing a liquid phase may be increased.

## Claims

1. A preparing method of high-strength ceramic particles, the preparing method comprising:
a first step of mixing silicate powder particles combined with metal ions with glass powder particles for low-temperature baking;
a second step of adding a polymer and a dispersant to the mixed powder particles and preparing ceramic granules;
a third step of press-forming the ceramic granules; and
a fourth step of sintering a formed body.

2. The preparing method of claim 1, wherein the silicate powder particles include one or more metal ions selected from Mg, Al, Zr, Li, Ba, MgAl, Na, and Ca.

3. The preparing method of claim 2, wherein the silicate powder particles combined with metal ions has a specific surface area of 20 to 500 m²/g measured by a Brunauer, Emmett and teller (BET) method.

4. The preparing method of claim 2, wherein an average particle diameter of the silicate powder particles combined with metal ions is 5 µm to 500 µm .

5. The preparing method of claim 1, wherein the glass powder particles for low-temperature baking is one or more selected from amorphous glass powder particles and ceramic powder particles for low-temperature baking.

6. The preparing method of claim 5, wherein the glass powder particles for low-temperature baking has any one of a plate shape, a fiber shape, and a polygonal shape.

7. The preparing method of claim 5, wherein the glass powder particles for low-temperature baking has an appropriate baking temperature range of 600 °C to 1200 °C.

8. The preparing method of claim 5, wherein the average particle diameter of the glass powder particles for low-temperature baking is 0.5 µm to 50 µm.

9. The preparing method of claim 1, wherein the glass powder particles for low-temperature baking are mixed with 1 part by weight to 500 parts by weight with respect to the silicate powder particles combined with metal ions.

10. The preparing method of claim 1, wherein the polymer added in the second step is one or more selected from polyvinyl alcohol, polyvinyl acetate, polyethylene, polyvinyl butyrene, polypropylene, polyvinyl chloride, polyacryl, polyacrylamide, guar gum, gelatin, and natural rubber.

11. The preparing method of claim 1, wherein the dispersant added in the second step is a wettable dispersant.

12. The preparing method of claim 1, wherein an average particle diameter of the ceramic granules prepared in the second step is 50 µm to 1000 µm.

13. The preparing method of claim 1, wherein the sintering in the fourth step is performed in a temperature range of 600 °C to 1200 °C.

14. The preparing method of claim 1, wherein, in the sintering process of the fourth step, a ceramic core-shell structure is formed by surface melting and necking of the glass powder particles for low-temperature baking.

15. The preparing method of claim 1, wherein the high-strength ceramic particles subjected to the sintering process in the fourth step are a porous structure.

16. A preparing method of microporous spherical particles for an aerosol generator, the preparing method comprising:
preparing a first dispersion solution by dispersing silicate powder particles combined with metal ions and a binder in a first solvent;
preparing a second dispersion solution by dispersing an additive in a second solvent and stirring the second solvent in which the additive is dispersed;
mixing the first dispersion solution with the second dispersion solution, and stirring the mixture to prepare a mixed slurry; and
spray-drying the mixed slurry.

17. The preparing method of claim 16, wherein the metal silicate powder particles include one or more metal ions selected from Mg, Al, Zr, Li, Ba, MgAl, Na, and Ca.

18. The preparing method of claim 16, wherein the metal silicate powder particles are dispersed in an amount of 5 wt% to 40 wt% with respect to the first solvent.

19. The preparing method of claim 16, wherein the binder used in preparing the first dispersion solution is one or more selected from polyvinyl alcohol, polyvinyl acetate, polyethylene, polyvinyl butyrene, polypropylene, polyvinyl chloride, polyacryl, polyacrylamide, guar gum, gelatin, and natural rubber.

20. The preparing method of claim 16, wherein the first solvent includes at least one selected from water, ethanol, toluene, IPA, and acetone.

21. The preparing method of claim 20, wherein the first solvent is used in an amount of 70 wt% to 220 wt% with respect to a weight of the metal silicate.

22. The preparing method of claim 16, wherein the additive used in the preparation of the first dispersion solution includes a high boiling point solvent including mineral spirits or xylene.

23. The preparing method of claim 22, wherein the additive is added in an amount of 0.5 wt% to 10 wt% with respect to the metal silicate.

24. The preparing method of claim 16, wherein the second solution includes one or more selected from water, ethanol, toluene, IPA, and acetone.

25. The preparing method of claim 24, wherein the second solvent used in the preparation of the second dispersion solution is included in an amount of 5 wt% to 30 wt% with respect to the metal silicate.

26. The preparing method of claim 16, wherein the spray-drying uses a disk method, and a rotation speed of the disk is controlled within a range of 500 rpm to 9000 rpm.

27. The preparing method of claim 16, wherein the spray-drying is performed in a chamber maintained at a temperature of 220 °C to 300 °C, and in the spray-drying step, the Benard cell effect is induced to cause defects on a surface of microporous spherical particles.

28. The preparing method of claim 16, wherein an average particle size of the microporous spherical particles finally prepared after the spray-drying is 5 µm to 500 µm.
